# EUROPÄISCHE PATENTANMELDUNG

(11) **EP 2 982 503 A1**
(43) Veröffentlichungstag der Anmeldung: **10.02.2016**
(21) Anmeldenummer: 14180141.5
(22) Anmeldetag: 07.08.2014
(51) Int. Cl.: B32B 5/24, B32B 5/28

(54) **Sandwich-Bauteile aus Poly(Meth)acrylat-basierten Schaumkörpern und reversibel vernetzbaren Composites**

(71) Anmelder: Evonik Röhm GmbH, 64293 Darmstadt (DE)
(72) Erfinder: Schmidt, Friedrich Georg, 45721 Haltern am See (DE); Menzel, Christoph, 64295 Darmstadt (DE); Faupel, Felix, 4051 Basel (CH); Inhestern, Marcel, 45665 Recklinghausen (DE); Pinto, Jorge, 64285 Darmstadt (DE)

(57) **Zusammenfassung**

Die vorliegende Erfindung betrifft ein Verfahren zur Herstellung von Verbundsystemen mit reversibel vernetzenden, faserverstärkte Deckschichten und einem Hartschaum als Kernschicht. Die Verbundsysteme weisen eine hohe Abschälfestigkeit auf. Insbesondere betrifft die vorliegende Erfindung ein Verfahren zur Herstellung von Verbundsystemen mit einem Poly(meth)acrylimid- (P(M)I-), insbesondere einem Polymethacrylimid- (PMI)Schaumkern mit reversibel vernetzbaren Deckschichten. Weiterhin betrifft die vorliegende Erfindung neuartige Verbundsysteme, die mittels dieses Verfahrens herstellbar sind.

## Beschreibung

### Gebiet der Erfindung

Die vorliegende Erfindung betrifft ein Verfahren zur Herstellung von Verbundsystemen mit reversibel vernetzenden, faserverstärkte Deckschichten und einem Hartschaum als Kernschicht. Die Verbundsysteme weisen eine hohe Abschälfestigkeit auf. Insbesondere betrifft die vorliegende Erfindung ein Verfahren zur Herstellung von Verbundsystemen mit einem Poly(meth)acrylimid- (P(M)I-), insbesondere einem Polymethacrylimid- (PMI)Schaumkern mit reversibel vernetzbaren Deckschichten. Weiterhin betrifft die vorliegende Erfindung neuartige Verbundsysteme, die mittels dieses Verfahrens herstellbar sind.

### Stand der Technik

Im Folgenden werden, wenn aus dem Zusammenhang nicht anders ersichtlich, die Begriffe Verbundsystem, Verbundwerkstoff, Composite und Compositematerial synonym verwendet.

Im Stand der Technik sind diverse Verfahren zur Herstellung von faserverstärkten Kunststoffen mit einem Hartschaumstoff oder zur Formgebung von harten Schaumwerkstoffen im Allgemeinen beschrieben. Unter Hartschaumstoffen werden im Zusammenhang dieser Erfindung Schaumstoffe verstanden, die sich nicht - wie zum Beispiel handelsübliche PU- oder Polystyrol-Schaumstoffe - mit geringen Kräften mechanisch verformen lassen und sich anschließend wieder zurückstellen. Beispiel für Hartschaumstoffe sind vor allem PVC-, PET- oder hochvernetzte PU-Schäume. Ein besonders stark belastbarer harter Schaumwerkstoff ist Poly(meth)acrylimid (PMI), wie er zum Beispiel von der Firma Evonik unter dem Namen ROHACELL^{®} vertrieben wird.

Für verschiedene Anwendungen werden Polymethacrylimidschäume mit faserverstärkten Schichten versehen, um Verbundsysteme mit hervorragenden Eigenschaften zu erhalten. Diese Verbundsysteme werden unter anderem zur Herstellung von Rotorblättern verwendet (US 5547629). Weiterhin ist der Verbund mit gängigen Thermoplasten beschrieben, wie etwa eine Laminierung von Polymethacrylimid-Schaumstoffen mit Polymethylmethacrylat (EP 736372). Eine weitere Anwendung von Polymethacrylimidschäumen gelingt durch den Einbau leitfähiger Partikel im den Schaum, wodurch dieser zur Absorption elektromagnetischer Strahlung verwendet werden kann (DE 38 26 469 A1).

Verbundsysteme können beispielsweise durch Auftragen von Prepregs auf den Schaumstoff erhalten werden. Sobald die faserverstärkten Schichten auf den Kern aufgebracht waren, konnte eine Umformung des Bauteils nur bei der Verwendung von thermoplastischen Matrices erfolgen. Thermoplastische Matrices weisen allerdings diverse Nachteile wie Kriechneigung etc. auf. Bei Verwendung von vernetzenden Matrixmaterialien wie z.B. Epoxidharzen wird eine höhere thermische, mechanische und Chemikalienresistenz-Performance erreicht. Hier kann aber auch bei erhöhten Temperaturen keine Verformung mehr stattfinden, ohne dass das Matrix-Material zerstört wird. Ein Kriterium für die mechanische Stabilität des Faserverbundsystems ist auch die Haftung zwischen vernetztem Prepreg und dem Schaum, die sogenannte Abschälfestigkeit. Es wurde festgestellt, dass herkömmliche Verfahren bei Kombinationen von Schaum und Prepreg häufig auch eine ungenügende Abschälfestigkeit ergeben, die zu einem Versagen des Composite-Werkstoffs führen können. Dies gilt insbesondere für mehrlagige Prepregs, die üblicherweise in dicken Stapeln aufgetragen werden. Ein Beispiel für solche Prepregs sind solche, die auf faserverstärkten Epoxy-Harzen basieren. Kombiniert man diese Produkte beispielsweise mit einem PMI-Schaum, so kann die Temperatur, die zur Härtung des Prepregs notwendig ist, nur stufenweise erhöht werden. Andernfalls kann ein Wärmestau auftreten, der zu einer Zerstörung des Produkts führen würde. Bei hohen Härtungstemperaturen erfolgt eine hohe Aushärtungsgeschwindigkeit, die wiederum zu einer hohen Wärme im Innern führt.

Problematisch bei mehrlagigen Prepregs ist hierbei, dass die im Innern entstehende Wärmeenergie nur unzureichend abfließen kann. Folglich wird zur Aushärtung üblicherweise ein Temperaturschema gefahren, das ein Wärmestau verhindert. Die so erhaltenen Composites zeigen jedoch vielfach nur eine geringe Abschälfestigkeit, die gemäß DIN 53295 oder ASTM D1781 bestimmt werden kann.

Ein allgemein bekanntes Verfahren zur Herstellung beschriebener Compositematerialien ist die Formgebung der Deckschichten mit anschließender Füllung des Schaumrohmaterials und dessen abschließender Schäumung. Ein solches Verfahren ist beispielsweise in US 4,933,131 beschrieben. Ein Nachteil dieses Verfahrens ist, dass die Schäumung zumeist sehr ungleichmäßig erfolgt. Dies gilt insbesondere für Materialien wie PMI, die bestenfalls als Granulat zugegeben werden können. Ein weiterer Nachteil eines solchen Verfahrens ist, dass zur Formgebung eines reinen Schaumwerkstoffs, die Deckschichten wieder entfernt werden müssten. Im Falle von Compositebauteilen wiederum ist die Haftung zwischen Deckschichten und dem Schaumkern oft nicht ausreichend für mechanisch belastete Bauteile.

In Passaro et al., Polymer Composites, 25(3), 2004, S.307ff ist ein Verfahren beschrieben bei dem ein PP-Schaumkernstoff mit einem faserverstärkten Kunststoff in einem Presswerkzeug zusammengefügt wird und dabei der Schaumkernstoff mittels des Werkzeugs gezielt nur an der Oberfläche erhitzt wird, um eine gute Bindung zum Deckmaterial zu ermöglichen. In Grefenstein et al., International SAMPE Symposium and Exhibition, 35 (1, Adv.Materials: Challenge Next Decade), 1990, S.234-44 ist ein analoges Verfahren zur Herstellung von Sandwich-Materialien mit einem Wabenkernmaterial oder einem PMI-Schaumkern beschrieben. Eine Formgebung ist mit diesen beiden Verfahren jedoch nicht möglich, sondern nur die Herstellung von Sandwichmaterialien in Plattenform.

In WO 02/098637 ist ein Verfahren beschrieben, bei dem ein thermoplastisches Deckmaterial als Schmelze auf die Oberfläche eines Schaumkernmaterials gebracht wird, dann zusammen mit dem Schaumkern zu einem Compositeformteil mittels einem Twin-Sheet-Verfahren geformt wird und anschließend der Thermoplast derart abgekühlt wird, dass das Deckmaterial in der Form erstarrt. Mit diesem Verfahren lässt sich jedoch nur eine begrenzte Zahl von Materialien kombinieren. So können zum Beispiel keine Faserverstärkten Deckmaterialien hergestellt werden. Auch ist das Verfahren zur reinen Formgebung eines Schaumwerkstücks ohne Deckmaterialien nicht anwendbar. Weiterhin ist auch die Auswahl der Schaumwerkstoffe auf bei niedrigen Temperaturen elastisch verformbare Materialien beschränkt. Ein Hartschaum würde bei einem solchen Verfahren ohne gleichmäßiges Aufheizen des Schaummaterials strukturell zu sehr beschädigt.

Sehr ähnlich ist das in EP 0 272 359 beschriebene Verfahren. Hier wird in Schaumkernrohling erst in Form geschnitten und in ein Werkzeug gelegt. Anschließend wird die Schmelze des thermoplastischen Materials auf die Oberfläche injiziert. Durch eine Temperaturerhöhung wird darauf der Schaumkernrohling aufgeschäumt, wodurch es zu einem Pressen auf die Oberfläche des Deckmaterials kommt. Zwar kann mit diesem Verfahren eine bessere Haftung zu dem Deckmaterial erreicht werden. Dafür ist das Verfahren mit dem zusätzlichen Arbeitsschritt der ersten Formgebung aufwendiger und insgesamt bezüglich der realisierbaren Formen deutlich stärker beschränkt.

In W. Pip, Kunststoffe, 78(3), 1988, S.201-5 ist ein Verfahren zur Herstellung von geformten Compositen mit faserverstärkten Deckschichten und einem PMI-Schaumkern in einem Presswerkzeug beschrieben. Bei diesem Verfahren erfolgt das Zusammenführen der einzelnen Schichten in einem beheizten Presswerkzeug, wobei eine leichte Formgebung durch ein Zusammendrücken der obersten Schichten im lokal erhitzten Schaumwerkstoff erfolgt. Gleichzeitig ist ein Verfahren beschrieben, bei dem durch ein Nachschäumen innerhalb des Werkzeugs eine Form gebildet werden kann. Die Nachteile eines solchen Verfahrens wurden bereits zuvor diskutiert. Als dritte Variante ist ein Verfahren offenbart, bei dem eine elastische Stauchung des Materials während des Pressens eines vorgeheizten Schaummaterials erfolgt. Das Vorheizen erfolgt in einem Ofen. Nachteil dieses Verfahrens ist jedoch, dass für viele Schaumwerkstoffe sehr hohe Temperaturen zur thermoelastischen Verformung benötigt werden. So werden zum Beispiel für PMI-Schäume Temperaturen von mindestens 185 °C benötigt. Weiterhin muss der Kernwerkstoff über den gesamten Materialbereich entsprechend aufgeheizt sein, um Materialbrüche zu vermeiden. Bei solchen Temperaturen, zumal diese in der gleichmäßigen Verteilung nur mit einem längeren Aufheizen von mehreren Minuten möglich sind, würden jedoch viele Deckmaterialien, wie z.B. PP, derart beschädigt, dass der Prozess nicht durchführbar ist.

In U. Breuer, Polymer Composites, 1998, 19(3), S. 275-9 ist ein leicht modifiziertes Verfahren der zuvor diskutierten dritten Variante aus Pip für PMI-Schaumkerne offenbart. Hier erfolgt das Aufheizen des PMI-Schaumkerns und der faserverstärkten Deckmaterialien mittels einer IR-Wärmelampe. Solche IR-Wärmestrahler, die vor allem Licht mit Wellenlängen im Bereich zwischen 3 und 50 µm (IR-C-, bzw. MIR-Strahlung) abstrahlen, sind besonders gut geeignet für ein schnelles Aufheizen des Substrats. Jedoch ist dabei der Energieeintrag - gewünscht - sehr hoch, was gleichzeitig zur Schädigung vieler Deckmaterialien, wie zum Peispiel PP, führt. So ist in Breuer et al. auch nur Polyamid 12 (PA12) als mögliches Matrixmaterial für die Deckschichten offenbart. PA 12 kann leicht auf über 200 °C erhitzt werden, ohne dass es zu einer Schädigung des Kunststoffes kommt. Eine gleichzeitige Formgebung des Schaumkerns ist in dieser Verfahrensweise nicht möglich, da die Wärmestrahlung des IR-Strahlungsbereiches nicht in die Schaummatrix eindringt und somit kein thermoplastisch formbarer Zustand erreicht wird.

In der deutschen Patentanmeldung mit dem Anmeldeaktenzeichen 102013223353.1 wird ein Verfahren zur Herstellung von Verbundsystemen mit einem P(M)I-Schaumkern und konventionellen Deckschichten beschrieben. Das besondere hier ist, dass der Schaumkern mittels NIR-Strahlung (nahe Infrarotstrahlung) vor dem Einlegen in die Presse und die dort erfolgende Verbindung mit den Deckschichten vorgeheizt und in der Presse endgeschäumt wird.

### Aufgabe

Vor dem Hintergrund des diskutierten Standes der Technik war es daher Aufgabe der vorliegenden Erfindung, ein neues Verfahren zur Verfügung zu stellen, mittels dem einfach und mit hoher Durchsatzgeschwindigkeit Verbundsystem mit einem Hartschaumkern, insbesondere mit einem P(M)I-Schaumkern, und faserverstärkten Deckschichten ohne strukturelle Schädigung des Schaumkerns hergestellt werden können. Dabei soll das fertige Verbundsystem nachträglich noch umformbar sein und eine sehr gute Abschälfestigkeit aufweisen.

Insbesondere war es Aufgabe der vorliegenden Erfindung, ein Verfahren zur Verfügung zu stellen, bei dem diese Compositematerialien formgebend hergestellt werden, ohne dass dieses während der Verarbeitung eine Schädigung erfährt.

Weiterhin war es eine zusätzliche Aufgabe der vorliegenden Erfindung, Verbundsysteme mit Hartschaumkern zur Verfügung zu stellen, die einfach, unter Rückgewinnung des Schaumkerns recycelbar sind.

Weiterhin sollen unabhängig von den einzelnen als Aufgaben gestellten Ausführungsformen mit dem neuartigen Verfahren schnelle Taktzeiten, z.B. von bis zu unter 10 min realisierbar sein.

Weitere, an dieser Stelle nicht explizit diskutierte Aufgaben, können sich im Weiteren aus dem Stand der Technik, der Beschreibung, den Ansprüchen oder Ausführungsbeispielen ergeben.

### Lösung

Im Weiteren werden unter der Formulierung Poly(meth)acrylimid Polymethacrylimide, Polyacrylimide oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

Gelöst werden die Aufgaben durch ein neuartiges Verfahren zur Herstellung von Verbundsystemen mit einer Grundschicht aus einem Hartschaumstoff, z.B. als Schaumkern, insbesondere mit einem Hartschaumstoff aus P(MI), bevorzugt mit einem Hartschaumstoff aus PMI, und mindestens einer auf dem Hartschaumstoff haftenden, reversibel vernetzbaren Deckschicht. Besonders bevorzugt handelt es sich bei dem es sich bei dem Schaumwerkstoff des Schaumkerns um einen PMI-Schaum in einem Dichtebereich von 25 bis 330 kg/m³. Neben P(M)I können mit dem erfindungsgemäßen Verfahren auch Hartschäume aus PVC, Polypropylen (PP) oder aus hochvernetztem Polyurethan (PU) zu Schaumkernen in den erfindungsgemäßen Verbundsystemen verarbeitet werden. Die Deckschicht bzw. die Deckschichten wiederum weisen reversibel vernetzende Polymerformulierung auf.

PVC-Hartschäume werden zumeist als Sandwichmaterial im Bootsbau, Rotorblättern oder Kraftfahrzeugen im Verbund mit Deckschichten eingesetzt. PVC Schaum ist im Dichtebereich von 25 bis 300 kg/m³ kommerziell verfügbar und wird in großem Umfang eingesetzt ist jedoch durch seine Hochtemperaturbeständigkeit nur limitiert mit Prepregs nutzbar.

PP-Schäume sind vor allem als Isolationsmaterial, in Transportbehältern und als Sandwichmaterial bekannt. PP-Schäume können Füllstoffe enthalten und sind zumeist in einem Dichtebereich zwischen 20 bis 200 kg/m³ kommerziell verfügbar. Zur besseren Anhaftung können insbesondere die Oberflächen eines PP-Schaums vor dem Auflegen einer Deckschicht mit einer Klebschicht oder einem Haftvermittler versehen werden.

PU-Hartschäume wiederum zeichnen sich gegenüber PU-Weichschäumen durch eine geschlossenere Porenstruktur und einen höheren Vernetzungsgrad aus. PU-Hartschäume können zusätzlich größere Mengen anorganischer Füllmaterialien enthalten.

Das erfindungsgemäße Verfahren zur Herstellung von Verbundsystemen mit ein, zwei oder mehr Deckschichten und einem dazwischen liegendem Hartschaumkern zeichnet sich insbesondere durch folgende Prozessschritte aus:
a. Optionales Aufheizen des Hartschaumstoffs,
b. Auflegen mindestens einer Deckschicht in Form eines oder mehrerer Prepregs oder eines zuvor hergestellten mehrschichtigen Laminats auf den Hartschaumstoff und Überführen in eine Presse oder einen Autoklaven,
c. Schließen der Presse bzw. des Autoklaven, Auflegen eines Innendrucks von mindestens 0,8 N/mm² und Erhitzen auf eine Temperatur zwischen 60 und 250 °C,
d. Abkühlen der Presse auf eine Innentemperatur kleiner 40 °C, Öffnen der Presse und Entnahme des Verbundsystems.

Bevorzugt handelt es sich bei dem Hartschaumstoff um Poly(meth)acrylimid (P(M)I), besonders bevorzugt um Polymethacrylimid (PMI). Besonders bevorzugt handelt es sich um einen PMI-Schaum in einem Dichtebereich von 20 bis 320 kg/m³, bevorzugt von 25 bis 220 kg/m³ und besonders bevorzugt von 50 bis 110 kg/m³.

Bevorzugte Ausführungsformen der erfindungsgemäßen herstellbaren Verbundwerkstoffe weisen zwei Deckschichten auf, die mit der Kernschicht eine Sandwichstruktur bilden.

Ohne dass hierdurch eine Beschränkung erfolgen soll, liegt die Dicke der Kernschicht gewöhnlich in einem Bereich von 0,05 bis 20 cm, insbesondere im Bereich von 0,5 bis 10 cm und ganz besonders bevorzugt im Bereich von 1 bis 7 cm.

Die Dicke der Deckschichten liegt in der Regel in einem Bereich zwischen 0,01 bis 10 cm, bevorzugt 0,05 bis 5 cm und besonders bevorzugt 0,1 bis 1 cm.

Vorzugsweise enthält der Verbundwerkstoff mehr als 30 Gew%, besonders bevorzugt mehr als 50 Gew% und ganz besonders bevorzugt mehr als 80 Gew% Hartschaumstoff.

Weiterhin können die Kernschicht und/oder die Deckschichten mit Aussparungen, Schrauben, Rohren oder anderen Inserts versehen sein. Auch können innerhalb des Schaumkerns oder außerhalb der Deckschichten weitere Schichten, z.B. zum Verkleben oder zu Dekorationszwecken vorhanden sein.

In Bezug auf die P(M)I-Hartschaumstoffe gibt es zwei gleichfalls bevorzugte Ausführungsformen des erfindungsgemäßen Verfahrens. In der ersten Ausführungsform liegt der Hartschaumstoff vor der Verbindung mit den Deckschichten ausgeschäumt und vorgeformt vor.

In der zweiten Ausführungsform liegt der Hartschaumstoff vor dem Schließen der Presse nicht geschäumt oder nur teilweise vorgeschäumt vorliegt. In dieser Variante erfolgt das Ausschäumen in Verfahrensschritt c.

Erfindungsgemäß handelt es sich bei der reversibel vernetzenden Polymerformulierung um reversibel vernetzende Polymere, bevorzugt um eine Polymerformulierung, die reversibel vernetzende Poly(meth)acrylate enthält. Insbesondere handelt es sich dabei um Polymerformulierungen, deren Aushärtung mittels einer reversiblen Vernetzung über eine (Hetero-)Diels-Alder-Reaktion erfolgt.

In einer ersten bevorzugten Variante der Erfindung weist die Polymerformulierung dazu Dien-Funktionalitäten mit einer Kohlenstoff-Schwefel-Doppelbindung und dienophile Doppelbindungen auf. In diesem Fall erfolgt die Vernetzung mittels einer Hetero-Diels-Alder-Reaktion.

In einer zweiten, gleichfalls bevorzugten Variante erfolgt das Aushärten der Deckschichten mittels einer reversiblen Vernetzung über eine Diels-Alder-Reaktion. Dazu weist die Polymerformulierung einerseits Dienophil-Funktionalitäten, bei denen es sich besonders bevorzugt um Maleimidgruppen handelt, und andererseits Dien-Funktionalitäten, bei denen es sich besonders bevorzugt um Furfural-, Cyclopentadienyl- oder um 1,3-Pentadienyl-Gruppen handelt, auf.

Darüber hinaus kann die Polymerformulierung in der Deckschicht noch weitere Zuschlagsstoffe, wie Additive oder Stabilisatoren enthalten. Insbesondere kann sie auch 5 bis 50 Gew% Füll- und/oder Farbstoffe aufweisen. Die Auswahl geeigneter Additive, Stabilisatoren, Füllstoffe und/oder Farbstoffe ist dem Fachmann leicht aus der allgemeinen Lehre zur Herstellung von konventionellen Prepregs ableitbar.

Weiterhin zeichnen sich Prepregs dadurch aus, dass sie in einer lagerfähigen Form vorliegen und dabei ausgehärtet sind, jedoch einfach durch eine entsprechende Temperaturerhöhung wieder in einen verformbaren Zustand überführt werden können. Dies spielt nicht nur bei der Formgebung und der Verbindung mit dem Hartschaumstoff in Verfahrensschritt c) eine Rolle, sondern auch bei einer möglichen späteren Formveränderung des fertigen Verbundsystems. In diesem verformbaren Zustand sind die Deckschichten auch mit anderen Verbundwerkstücken oder entsprechenden Prepregs ohne Schaumkern verschweißbar.

Ein sehr großer und überraschender Vorteil der vorliegenden Erfindung ist es, dass das fertige Verbundsystem aus Deckschichten und Hartschaumstoff durch eine Temperaturerhöhung auf eine für die Retro-(Hetero-)Diels-Alder-Reaktion geeigneten höheren Temperatur, insbesondere auf mindestens 80 °C nachträglich weiter umgeformt werden kann, und dass eine solche nachträgliche Umformung mehrfach durchgeführt werden kann. Dabei hängt der Grad der möglichen Umformbarkeit ausschließlich von der Dicke, der Form, der Dichte und der Art des Hartschaumstoffs ab. Im Falle eines Schaumkerns aus einer 2 cm dicken PMI-Platte ist beispielsweise eine Umformung bei einer Temperatur in einem Bereich von 190 °C um bis zu 245 ° möglich. Die genaue Umformtemperatur hängt dabei jedoch von der jeweils spezifischen Zusammensetzung des Materials ab und lässt sich leicht experimentell von einem Fachmann ermitteln.

Bei der Formgebung in Prozessschritt c) des erfindungsgemäßen Verfahrens werden die Deckschichten erst nach der Formgebung und der gleichzeitigen Verbindung mit dem Schaumkern durch das Abkühlen in Prozessschritt d) ausgehärtet.

Überraschend wurde festgestellt, dass einerseits die Haftung der Deckschichten auf dem Schaumkern aus dem Hartschaumstoff sehr gut ist und andererseits eine gute (mehrfache) Umformbarkeit des kompletten Sandwichbauteils möglich ist.

### Verfahren

In Prozessschritt a) erfolgt das optionale Aufheizen des Hartschaums, bevor dieser mit den Deckschichten in Kontakt gebracht wird. Dieses Vorgehen hat den Vorteil, dass eine schnellere und bei kurzen Taktzeiten festere Verbindung mit den Deckschichten erzielt werden kann. Bei der Ausführungsform des erfindungsgemäßen Verfahrens, nachdem die Ausschäumung des Hartschaumstoffs erst in Verfahrensschritt c) erfolgt, wird mit diesem Vorgehen eine zusätzliche Beschleunigung des Verfahrens gewährleistet und eine gleichmäßige Schäumung erzielbar. Diese Variante hat den großen Vorteil, dass durch gleichzeitiges Pressen auf die Deckschichten und Ausschäumen des Hartschaumstoffs eine besonders feste Verbindung zwischen diesen Schichten erreicht wird.

In einer besonderen Variante dieses Prozesses wird der Hartschaumstoff vor dem Schließen der Presse mittels NIR-Strahlung oder thermisch auf eine Temperatur größer 100 °C, bevorzugt auf eine Temperatur zwischen 170 und 250 °C, erhitzt. Dabei kann zusätzlich direkt vor dem Schließen der Presse bzw. des Autoklaven ein Vorformen des Hartschaumstoffs mittels Pressluft erfolgen. Ein solches Verfahren kann, insbesondere in Bezug auf das Aufheizen mit NIR-Strahlung, in der deutschen Patentanmeldung mit dem Anmeldeaktenzeichen 102013223353.1 nachgelesen werden. Das dort beschriebene Verfahren ist unter eventuell leichten Modifikationen in Bezug auf die Temperaturführung in der Presse auf die vorliegende Erfindung als Verfahrensvariante anwendbar. Bezüglich Prozessschritt a) ist insbesondere eine NIR-Strahlung mit einer Wellenlänge zwischen 0,78 und 1,40 µm geeignet. Als besonders günstig erweist es sich dabei, wenn der Schaumkern bereits während des Aufheizens in der Transporteinrichtung eingespannt ist, mittels derer ein Weitertransport in die Presse erfolgt.

Bei einer (semi-)kontinuierlichen Durchführung des erfindungsgemäßen Verfahrens hat es sich als besonders vorteilhaft erwiesen, Prozessschritt a) mit einem Hartschaumstoff durchzuführen, während ein anderer Hartschaumstoff gleichzeitig in den Verfahrensschritten b) bis d) weiterverarbeitet wird. Auf diese Weise lassen sich besonders kurze Taktzeiten realisieren.

Das Auflegen einer oder mehrerer Deckschichten und die Überführung des aufgeheizten Hartschaumstoffs mit den aufgelegten Deckschichten in eine Presse oder einen Autoklaven erfolgt in Prozessschritt b). Bevorzugt erfolgt dies mittels einer Transporteinrichtung mit Verfahrrahmen. Dadurch ist eine (semi)kontinuierliche Durchführung des Verfahrens möglich. In der Regel ist diese Transporteinrichtung mit einem linearmotorischen Antrieb versehen. Bevorzugt ist der Hartschaumstoff bereits beim Einfahren in die Heizstation in einem mit dem Verfahrrahmen verbundenen Spannrahmen eingespannt.

Alternativ können die zuvor erwähnten Polymerzusammensetzungen und Faserverstärkungen auch manuell auf den Hartschaumstoff aufgetragen werden. Hierbei werden abwechselnd Schichten aus Polymerzusammensetzung und Faserbahnen aufgelegt. Nach dem Aufbringen der faserverstärkten Harzschicht wird das Harz auf bekannte Weise laminiert.

In der optionalen Variante eines Vorheizens des Hartschaumstoffs ist darauf zu achten, dass der Hartschaumstoff während dieses Transports in Gänze oberhalb der Plastifizierungstemperatur bleibt. Dies kann durch einen kurzen Weg zwischen der Heizstation und der Presse oder bzw. zusätzlich durch eine entsprechend hohe Umgebungstemperatur auf dieser Strecke, z.B. innerhalb einer Einhausung oder durch zusätzliche NIR-Strahlungsquellen, bewirkt werden.

Bevor in Prozessschritt c) die Presse geschlossen wird, ist es optional möglich, ein Vorformen des erhitzten Schaumkerns mittels Pressluft durchzuführen. Dies kann besonders bei Verbundsystemen mit einer starken Krümmung zu noch besseren Ergebnissen führen.

In Prozessschritt c) erfolgt darauf das Schließen der Presse oder des Autoklaven, wobei eine Presse bevorzugt ein zweischaliges Werkzeug aufweist und beide Werkzeugschalen jeweils mit einer Prepreg- oder Faser-Matrix-Decklage, zusammengesetzt aus einem Fasermaterial und einem Harz, belegt sind. Dabei weist das zweischalige Werkzeug eine Form auf, die während des Pressens vorgebend auf die Verbundsysteme wirkt. In diesem Fall erfolgen die Prozessschritte b) und c) gleichzeitig, da das Auflegen der Deckschichten erst durch das Schließen der Presse erfolgt.

Geeignete Pressverfahren sind in der Fachwelt weithin bekannt. Bevorzugt sind Warmpressverfahren, wobei auch spezielle Ausführungsformen, wie beispielsweise Doppelbandpressen, SMC-Pressen und GMT- Pressen von der Erfindung erfasst werden. Zur weiteren Verfestigung des Verbundwerkstoffs kann die Kernschicht beim Warmpressen zusätzlich verdichtet werden. Hierzu können bei dem Pressvorgang Abstandshalter, sogenannte Anschläge, verwendet werden. Diese erleichtern die Einstellung eines erwünschten Verdichtungsgrades der Kernschicht, ohne dass hierdurch eine Beschränkung der Erfindung erfolgen soll.

Typische Arbeitsbedingungen, bei denen die Prepregs bzw. SMCs in der Presse zu fließen beginnen und damit verformbar sind, sind Drücke von mehr als 0,8 N/mm², insbesondere von mehr als 1 N/mm² und Temperaturen im Bereich 80 bis 180 °C. Diese Parameter können auch als Stufengradient gefahren werden, um einen Wärmestau zu vermeiden.

Bevorzugt wird das Material der Decklagen in einer Presse in einem Spannrahmen zwischen den Werkzeughälften positioniert. Alternativ wird das Material in dem Gerät mittels eines Niederhalterrahmens fixiert, um ein Verrutschen zu vermeiden. Dazu steht das zu verarbeitende Material z.B. einige Zentimeter über den Werkzeugrand heraus und wird in diesem Bereich mittels des erwähnten Niederhalterrahmens heruntergedrückt.

Auch in Prozessschritt c) erfolgt nach dem Schließen der Presse bzw. des Autoklaven und der dabei erfolgenden Formgebung ein Aufheizen der Werkzeugschalen auf die Presstemperatur. Durch den direkten Kontakt zwischen den Werkzeugschalen und dem Deckmaterial kann dabei eine sehr schnelle Formgebung erfolgen. Die zur Formgebung verwendete Temperatur hängt von der genauen Zusammensetzung der Polymerformulierung und von der Frage, ob ein weiteres Schäumen des Hartschaumstoffs erfolgen soll, ab und ist für den Fachmann leicht ermittelbar. In der Regel liegen solche Temperaturen zwischen 60 und 250 °C, bevorzugt zwischen 80 und 220 °C und besonders bevorzugt zwischen 100 und 180 °C. Im Falle einer zusätzlichen Schäumung des Schaumkerns sind die bevorzugten Temperaturen zwischen 170 und 250 °C.

Das besondere an dem erfindungsgemäßen Verfahren gegenüber Verfahren des Standes der Technik ist, dass bei den angegebenen Temperaturen keine Härtung der Deckschichten erfolgt, sondern ganz im Gegenteil die reversible Vernetzung größtenteils rückgängig gemacht wird und damit aus harten, überwiegend unflexiblen Deckschichten verformbare Materialien werden. Damit stellt die Temperatur bei bzw. nach Schließen der Presse in Verfahrensschritt c) keine Härtungstemperatur, sondern die Temperatur, bei der die Retro-(Hetero-)Diels-Alder-Reaktion erfolgt, dar. Das erneute Aushärten bzw. Vernetzen der Deckschichten erfolgt dann in Verfahrensschritt d) während des Abkühlens.

In Prozessschritt d) findet darauf ein Abkühlen der Werkzeugschalen auf eine Härtungs- und Entformungstemperatur statt. Dies kann beispielsweise dadurch erfolgen, dass die Werkzeugschalen im Inneren oder auf der dem Werkstück abgewandten Seite mit Rohren für eine Kühlflüssigkeit, z.B. für Wasser ausgestattet sind. Die Entformungstemperatur ist dabei materialabhängig und für den Fachmann leicht zu ermitteln und liegt in der Regel, mindestens 30 °C, bevorzugt mindestens 40 °C unterhalb der Temperatur aus Verfahrensschritt c). Ganz besonders bevorzugt wird in Verfahrensschritt d) auf Raumtemperatur oder zumindest auf eine Temperatur der Deckschichten von maximal 40 °C, insbesondere von maximal 30 °C abgekühlt. Bei dieser Temperatur erfolgt eine erneute Härtung der Deckschichtung durch eine (Hetero-)Diels-Alder-Reaktion. Dazu reicht es, dass die Deckschichten auf die entsprechenden Temperaturen abgekühlt werden. Eine Restwärme innerhalb des Schaumkerns ist für die Entnahme in der Regel nicht störend.

Beim Abkühlen vernetzt die Matrix nicht nur innerhalb der optional vorher zusammengelegten Prepreg-Lagen der Deckschicht, sondern insgesamt über die Schichtgrenzen hinweg innerhalb der gesamten Deckschicht und ergibt zudem eine besonders gute Haftung zum Hartschaumstoff.

Die bei Raumtemperatur erfolgende kovalente Vernetzung bietet darüber hinaus den Vorteil, dass z.B. kein "Kriechen" unter mechanischer Belastung auftritt, wie es bei thermoplastischen oder auch teilkristallinen Composites häufiger zu beobachten ist.

Nach dem Abkühlen erfolgen schließlich das Öffnen der Presse bzw. des Autoklaven und die Entnahme des fertigen Verbundsystems z.B. durch Herausfahren des Verfahrrahmens. Zusätzlich kann durch ein Auftragen von einem Entformungshilfsmittel zwischen Deckschichten und Werkzeugschalen die Entnahme des Verbundsystems erleichtert werden. Als Entformungshilfsmittel können beispielsweise Silikonöle oder aliphatische Öle zum Einssatz kommen.

Das erfindungsgemäße Verfahren hat insbesondere den großen Vorteil, dass es mit sehr geringen Taktzeiten durchgeführt werden kann und damit sehr gut in einer Serienproduktion eingesetzt werden kann. Die reine Pressdauer beträgt üblicherweise 5 Minuten bis maximal 6 Stunden, je nach Art der faserverstärkten Schicht und des Hartschaumstoffs. Ein besonders zweckmäßiger Bereich liegt zwischen 10 und 120 Minuten.

Für das gesamte erfindungsgemäße Verfahren richten sich die zu wählenden Verfahrensparameter nach der im Einzelfall eingesetzten Anlage und deren Auslegung, sowie den eingesetzten Materialien. Sie können durch wenige Vorversuche für den Fachmann leicht ermittelt werden.

In einer alternativen Ausführungsform kann das erfindungsgemäße Verfahren auch mittels eines Twin-sheet-Verfahrens unter Vakuum bzw. unter Unterdruck durchgeführt werden. Die Twin-sheet-Vorrichtung ist dabei derart gestaltet, dass diese als Pressformmaschine eingesetzt werden kann. Das Twin-sheet-Verfahren zeichnet sich grundsätzlich dadurch aus, dass zwei oder mehr Werkstücke in einem Verfahrensschritt im Vakuum bzw. unter Unterdruck verformt und dabei ohne Zusätze wie Klebstoffe, Schweißhilfsstoffe oder Lösungsmittel miteinander verschweißt werden. Dieser Verfahrensschritt ist in kurzen Taktzeiten, wirtschaftlich und umweltfreundlich durchzuführen.

Ein großer Vorteil des erfindungsgemäßen Verfahrens ist weiterhin, dass es umweltschonend und in sehr kurzen Taktzeiten unter gleichzeitiger Zusammenfassung mehrerer Arbeitsschritte in einem Prozess durchgeführt werden kann.

Zur erneuten Umformung der erfindungsgemäß hergestellten Verbundwerkstoffe wird wie bei Sandwichsystemen mit thermoplastischen Matrixmaterialien die Temperatur erhöht und die gewünschte neue Form entweder im Autoklaven oder in der Presse oder durch Umformen, z.B. unter Verdrehung oder Biegung, erzeugt. Die Höhe der Umformtemperatur richtet sich nicht nur nach der Entnetzungstemperatur der Polymerzusammensetzung, sondern auch nach der für die Verformung des Hartschaumstoffs notwendigen Temperatur.

Ein großer Vorteil der vorliegenden Erfindung ist weiterhin, dass das das fertige Verbundsystem recycelt werden kann. Dazu wird das Verbundsystem auf eine geeignete Temperatur, bei der die Retro-(Hetero-)Diels-Alder-Reaktion erfolgt, erhitzt. Dabei kann es sich beispielsweise um eine Temperatur oberhalb von 80 °C, z.B. zwischen 80 und 120 °C handeln. Um den Vorgang zu beschleunigen, kann die Temperatur aber auch deutlich höher angesetzt werden. Wenn diese Temperatur erreicht ist, wird anschließend die Deckschicht vom Hartschaumstoff abgezogen. Überraschenderweise ist dabei eine fast vollständige Entfernung der Deckschichten möglich. Reste können durch Abschleifen geringer Mengen der Oberfläche des Hartschaumstoffs entfernt werden. Auf diese Weise kann zumindest der Hartschaumstoff und, je nach Temperatur und Abzugstechnik, auch die Deckschicht wieder verwendet werden.

### Die Deckschichten

Überraschenderweise ist die Wahl des Deckmaterials abgesehen von dem Härtemechanismus erfindungsgemäß relativ frei wählbar. Wenn die Deckschichten in Form von Prepregs eingesetzt werden, bestehen diese mindestens aus der Polymerzusammensetzung und einem Fasermaterial, wobei das Fasermaterial bevorzugt wiederum aus langen Fasern besteht, die in der Regel in Form eines Gewebes, Gestrickes, Gelege oder als nichtdirektionale oder unidirektionale Schicht vorliegen. In einer zweiten Variante der vorliegenden Erfindung können alternativ zu den Prepregs auch analoge Systeme zu so genannten Sheet-Molding-Compounds (SMC) auf Basis der oben beschriebenen Polymerzusammensetzung als Material der Deckschicht eingesetzt werden. Diese SMC zeichnen sich dadurch aus, dass sie mindestens aus einem Harz, aus kurzen Fasern und aus mineralischen Füllstoffen bestehen. Die kurzen Fasern liegen dabei frei verteilt in dem Harz vor. Mit solchen Materialien sind besonders gute mechanische Festigkeiten zu erreichen. Zu den einsetzbaren SMCs gehören insbesondere SMC-R (SMC mit willkürlich orientierten Fasern), SMC-O (SMC mit orientierten Fasern), SMC-CR (SMC mit Fasern, die teilweise orientiert sind), XMC (SMC mit netzförmiger Faserverstärkung) und HMC (SMC mit hohem Fasergehalt).

Bei den Fasern kann es sich insbesondere um Kohle-, Metall-, Glas-, Textil-, Polymer- oder Aramidfasern handeln. Beispiele für weitere Polymerfasern außer den Aramidfasern sind Polypropylen-, Polyethylen-, Polyester-, Polyamid-, Polyurethan-, Polymethyl(meth)acrylat- und Polyvinylchloridfasern. Dabei werden in SMC analogen Deckschichten überwiegend kurze Glasfasern eingesetzt. Die Fasern liegen in der Regel in Form eines Gewebes, Gestrickes, Geleges, als nichtdirektionale Schichten oder als unidirektionale Schichten vor. In besonderen Ausführungen der Erfindung kann es sich bei der Deckschicht z.B. um so genannte Organobleche oder mit der Polymerzusammensetzung beschichtete textile Trägerbahnen wie z.B. Kunstleder handeln. Darüber hinaus können die Deckschichten auch einen mehrschichtigen Aufbau, z.B. in Form von unterschiedlichen Bahnen aus Fasermaterial, aufweisen. Zur besonders guten Oberflächenausbildung kann als äußerste Lage auch zusätzlich eine nicht faserverstärkte Folie aus reiner Polymerzusammensetzung oder aus einem anderen Polymer, wie z.B. einem Poly(meth)acrylat aufgebracht werden.

Diese Materialien sind an sich bekannt und beispielsweise in Ullmann's, Encyclopedia of Industrial Chemistry 5. Auflage, Stichwort "Fabrication of Polymer Composites").

In einer ersten Variante wird zur Herstellung der Deckschicht das Fasermaterial mittels Infusion, RTM-Verfahren oder einer Nasspress-Imprägnierung mit einer flüssigen Zusammensetzung, die eine Vorstufe zur Polymerformulierung darstellt, versehen. Anschließend wird die Polymerformulierung durch eine in-situ-Polymerisation der Zusammensetzung gebildet. Dabei kann die Zusammensetzung ausschließlich aus Monomeren oder bevorzugt aus einer Monomer-Polymer-Mischung bestehen.

In einer zweiten Variante wird das Fasermaterial analog mit einer Lösung, die Polymerzusammensetzung oder eine Vorstufe dazu enthaltend, imprägniert. Bei dieser Variante ist es vorteilhaft, wenn die Komponenten der Lösung die einerseits die Dien-Funktionalität und andererseits die Dienophil-Funktionalität aufweisen erst kurz oder während des eigentlichen Imprägnierens miteinander vermischt werden. Dies ist je nach System dadurch geboten, dass die (Hetero-)Diels-Alder-Reaktion je nach Formulierung bereits bei Raumtemperatur erfolgt. Der besondere Vorteil dieser Variante ist die im Vergleich zu Schmelzen erniedrigte Viskosität der nicht verknüpften nebeneinander vorliegenden Bausteine, die insbesondere niedermolekular eingestellt werden können.

In einer dritten Variante erfolgt die Imprägnierung mit einer wässrigen Dispersion, welche Emulsionspolymerisate, die wiederum beide Funktionalitäten durch Copolymerisation und/oder Quellung aufweisen, enthält. Diese Emulsionspolymerisate sind intrapartikulär vernetzt und können nach der Imprägnierung und einer eventuellen Trocknung durch ein kurzes Aufheizen eine Matrix aus der Polymerzusammensetzung ausbilden.

In einer vierten Variante erfolgt die Herstellung der Deckschichten durch Zugabe der Polymerzusammensetzung als Pulver. Dabei kann es sich bei diesem Pulver insbesondere um ein Emulsionspolymerisat oder ein Suspensionspolymerisat handeln, in welches mindestens eine der beiden Funktionalitäten durch Copolymerisation entsprechender Monomere gebunden ist. Dies zweite Funktionalität wird dann gleichfalls Copolymerisiert, in Form von bevorzugt niedermolekularen Verbindungen zugemischt oder in die Partikel eingequollen. Die Matrixbildung erfolgt dann analog zu den wässrigen Dispersionen.

In einer fünften Variante wird die Polymerzusammensetzung kurz vor der Imprägnierung gemischt und als Schmelze auf das Fasermaterial aufgebracht.

Zusätzlich können zur Verbesserung der Haftung zwischen Schaumkernmaterial und Deckschichten Haftvermittler verwendet werden. Diese Haftvermittler können im Matrixmaterial der Deckschichten enthalten sein. Alternativ können die Haftvermittler auch vor dem Zusammenführen auf der Oberfläche der Deckschichten oder des Schaumkerns aufgetragen werden. Bei diesem Vorgehen können alternativ auch geeignete Klebstoffe eingesetzt werden. Als Haftvermittler haben sich insbesondere Polyamide oder Poly(meth)acrylate als geeignet erwiesen. Es können aber auch niedermolekulare Verbindungen, die aus der Herstellung von Compositematerialien, insbesondere in Abhängigkeit vom verwendeten Matrixmaterial der Deckschicht, dem Fachmann bekannt sind, verwendet werden. Bevorzugt werden jedoch weder Haftvermittler, noch Klebstoffe eingesetzt.

### Der Hartschaumstoff

Ein bevorzugtes Material für den Hartschaumstoff, der den Schaumkern des Verbundsystems darstellt, ist P(M)I, insbesondere PMI. Solche P(M)I-Schäume zeichnen sich durch eine besondere Festigkeit aus. Die P(M)I-Schäume werden normalerweise in einem zweistufigen Verfahren hergestellt: a) Herstellung eines Gusspolymerisats und b) Aufschäumen dieses Gusspolymerisats. Dabei kann das Aufschäumen auch in mehreren von einander getrennten Stufen erfolgen. Damit ist es beispielsweise möglich vorgeschäumte Schaumkerne mit den Deckschichten zu belegen und darauf den Schäumungsprozess fortzusetzen.

Die Herstellung solcher PMI-Schäume ist dem Fachmann grundsätzlich bekannt und kann beispielsweise in EP 1 444 293, EP 1 678 244 oder WO 2011/138060 nachgelesen werden. Als PMI-Schäume seien insbesondere ROHACELL^{®}-Typen der Firma Evonik Industries AG genannt. Bezüglich Herstellung und Verarbeitung sind zu den PMI-Schäumen Acrylimid-Schäume als Analoga anzusehen. Aus toxikologischen Gründen sind diese jedoch gegenüber anderen Schaummaterialien deutlich weniger bevorzugt.

Die benötigten Schaumkerne können durch eine geeignete Wahl der Glasplatten bei einer Substanzpolymerisation oder durch eine Herstellung mittels eines In-mold-Foamings hergestellt werden. Alternativ erfolgt die Herstellung aus aufgeschäumten Schaumplatten durch Herausschneiden, Sägen oder Fräsen. Dabei können bevorzugt mehrere Schaumteile aus einer Platte geschnitten werden.

Die Dichte des Hartschaummaterials ist relativ frei wählbar. PMI Schäume können beispielsweise in einem Dichtebereich von 25 bis 330 kg/m³ eingesetzt werden.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den harzgetränkten Fasern dringt ein Teil des noch nicht ausgehärteten Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Alternativ zu den beschriebenen P(M)I-Schaumkernen können erfindungsgemäß auch andere Hartschaumkerne eingesetzt werden. Solche Schäume sind dem Fachmann im Allgemeinen bekannt. Beispiele für solche alternativen Hartschaumstoffe sind vor allem PP-, PMMA- oder hochvernetzte PU-Schäume.

### Verbundsysteme

Neben dem beschriebenen Verfahren sind auch die mittels des Verfahrens herstellbaren Verbundsysteme Teil der vorliegenden Erfindung. Diese Verbundsysteme weisen einen Hartschaumkern aus aufgeschäumten PP, PVC, P(M)I, PET, PMMA oder hochvernetzten PU und mindestens eine Deckschicht, enthaltend ein Fasermaterial und eine reversibel vernetzte Polymerformulierung, auf. Gegenüber dem Stand der Technik unterscheiden sich diese Verbundsysteme bevorzugt dadurch, dass sich die Deckschichten aus einem reversibel vernetzbaren Prepreg- oder SMC-Material bestehen und keine Verbindungselemente wie Nähte, Bolzen oder andere Krafteinleitungselemente aufweisen. Zusätzlich können sich die erfindungsgemäßen Verbundsysteme dadurch von Stand der Technik unterscheiden, dass sie keine Klebschicht zwischen Hartschaumstoff und Deckmaterialien aufweisen müssen.

Insbesondere betrifft die vorliegende Erfindung Verbundsysteme, die in den Deckschichten Polymerformulierungen, enthaltend Poly(meth)acrylate, aufweisen, die vor der reversiblen Vernetzung Dien-Funktionalitäten mit einer Kohlenstoff-Schwefel-Doppelbindung und dienophile Doppelbindungen aufweisen. Alternativ betrifft die vorliegende Erfindung Verbundsysteme, die in den Deckschichten Polymerformulierungen, enthaltend Poly(meth)acrylate, aufweisen, die vor der reversiblen Vernetzung Dien-Funktionalitäten mit einer Kohlenstoff-Schwefel-Doppelbindung und Maleimidgruppen als Dienophile aufweisen.

Grundsätzlich sind die erfindungsgemäßen Verbundsysteme aus einem Hartschaumstoff als Kernmaterial sehr breit einsetzbar. Erfindungsgemäß hergestellte Verbundsysteme können insbesondere Anwendung in der Serienfertigung z.B. für Karosseriebau oder für Innenverkleidungen in der Automobilindustrie, Interiorteile im Schienenfahrzeugs- oder Schiffsbau, in der Luftund Raumfahrtindustrie, im Maschinenbau, beim Möbelbau oder bei der Konstruktion von Windkraftanlagen finden.

## Patentansprüche

1. Verfahren zur Herstellung eines Verbundsystems, bestehend aus einer Grundschicht, aus einem Hartschaumstoff und mindestens einer auf dem Hartschaumstoff haftenden Deckschicht, **dadurch gekennzeichnet, dass** die Deckschicht reversibel vernetzende Polymerformulierung aufweist, und dass das Verfahren folgende Prozessschritte aufweist:
a. optionales Aufheizen des Hartschaumstoffs,
b. Auflegen mindestens einer Deckschicht in Form eines oder mehrerer Prepregs oder eines zuvor hergestellten mehrschichtigen Laminats auf den Hartschaumstoff und Überführen in eine Presse oder einen Autoklaven,
c. Schließen der Presse bzw. des Autoklaven, Auflegen eines Innendrucks von mindestens 0,8 N/mm² und Erhitzen auf eine Temperatur zwischen 60 und 250 °C,
d. Abkühlen der Presse auf eine Innentemperatur kleiner 40 °C, Öffnen der Presse und Entnahme des Verbundsystems.

2. Verfahren gemäß Anspruch 1, **dadurch gekennzeichnet, dass** es sich bei dem Hartschaumstoff um Poly(meth)acrylimid (P(M)I) handelt, und dass der Hartschaumstoff vor der Verbindung mit der Deckschicht ausgeschäumt und vorgeformt vorliegt.

3. Verfahren gemäß Anspruch 1, **dadurch gekennzeichnet, dass** es sich bei dem Hartschaumstoff um Poly(meth)acrylimid (P(M)I) handelt, und dass der Hartschaumstoff vor dem Schließen der Presse nicht geschäumt oder nur teilweise vorgeschäumt vorliegt und in Verfahrensschritt c ausgeschäumt wird.

4. Verfahren gemäß mindestens einem der Ansprüche 1 bis 3, **dadurch gekennzeichnet, dass** es sich bei der reversibel vernetzenden Polymerformulierung um reversibel vernetzende Poly(meth)acrylate enthält.

5. Verfahren gemäß mindestens einem der Ansprüche 1 bis 4, **dadurch gekennzeichnet, dass** die Aushärtung der Polymerformulierung in der Deckschicht mittels einer reversiblen Vernetzung über eine Hetero-Diels-Alder-Reaktion erfolgt, und dass dazu die Polymerformulierung Dien-Funktionalitäten mit einer Kohlenstoff-Schwefel-Doppelbindung und dienophile Doppelbindungen aufweist.

6. Verfahren gemäß mindestens einem der Ansprüche 1 bis 4, **dadurch gekennzeichnet, dass** die Aushärtung der Polymerformulierung in der Deckschicht mittels einer reversiblen Vernetzung über eine Diels-Alder-Reaktion erfolgt, und dass dazu die Polymerformulierung Dienophil-Funktionalitäten, bei denen es sich um Maleimidgruppen handelt, und Dien-Funktionalitäten, bei denen es sich um Furfural-, Cyclopentadienyl- oder um 1,3-Pentadienyl-Gruppen handelt, aufweist.

7. Verfahren gemäß mindestens einem der Ansprüche 1 bis 6, **dadurch gekennzeichnet, dass** die Polymerformulierung 5 bis 50 Gew% Füll- und/oder Farbstoffe enthält.

8. Verfahren gemäß Ansprüchen 1 bis 7, **dadurch gekennzeichnet, dass** zur Herstellung der Deckschicht das Fasermaterial mittels Infusion, RTM-Verfahren oder eine Nasspress-Imprägnierung mit einer flüssigen Zusammensetzung, die eine Vorstufe zur Polymerformulierung darstellt, versehen wird und anschließend die Polymerformulierung durch eine in-situ-Polymerisation gebildet wird.

9. Verfahren gemäß mindestens einem der Ansprüche 1 bis 8, **dadurch gekennzeichnet, dass** es sich bei der Deckschicht um einen Prepreg, hergestellt aus dem Fasermaterial und der Polymerformulierung, die in Form eines Pulvers, einer Schmelze, einer Lösung oder einer wässrigen Dispersion mit dem Fasermaterial appliziert wurde, handelt.

10. Verfahren gemäß einem der Ansprüche 1 oder 9, **dadurch gekennzeichnet, dass** es sich bei dem Schaumwerkstoff um einen PMI-Schaum in einem Dichtebereich von 25 bis 330 kg/m³ handelt.

11. Verfahren gemäß mindestens einem der Ansprüche 1 bis 10, **dadurch gekennzeichnet, dass** der Hartschaumstoff vor dem Schließen der Presse mittels NIR-Strahlung oder thermisch auf eine Temperatur größer 100 °C erhitzt wird und direkt vor dem Schließen der Presse bzw. des Autoklaven ein Vorformen des Hartschaumstoffs mittels Pressluft erfolgt.

12. Verfahren gemäß mindestens einem der Ansprüche 1 bis 11, **dadurch gekennzeichnet, dass** die Fasern der Deckschicht in Form eines Gewebes, Gestrickes, Gelege, als nichtdirektionale Schichten oder als unidirektionale Schichten vorliegen, und dass es sich bei den Fasern um Metall-, Kohle-, Glas-, Polymer- oder Aramidfasern handelt.

13. Verfahren gemäß mindestens einem der Ansprüche 1 bis 12, **dadurch gekennzeichnet, dass** das das fertige Verbundsystem recycelt wird, und dass dazu das Verbundsystem auf eine geeignete Temperatur zwischen 80 und 120 °C erhitzt wird und anschließend bei dieser Temperatur die Deckschicht vom Hartschaumstoff abgezogen wird.

14. Verbundsystem, aufweisend einen Hartschaumstoff aus aufgeschäumten PP, P(M)I oder hochvernetztem PU und mindestens eine Deckschicht, enthaltend ein Fasermaterial und eine reversibel vernetzte Polymerformulierung.

15. Verbundsystem gemäß Anspruch 14, **dadurch gekennzeichnet, dass** dieses keine Klebschicht zwischen Hartschaumstoff und Deckschicht aufweist.

16. Verbundsystem gemäß Anspruch 14 oder 15, **dadurch gekennzeichnet, dass** die Polymerformulierung Poly(meth)acrylate und vor der reversiblen Vernetzung Dien-Funktionalitäten mit einer Kohlenstoff-Schwefel-Doppelbindung und dienophile Doppelbindungen aufweist.
